# FASCICULE DE BREVET EUROPEEN

(11) **EP 4 157 673 B1**
(45) Date de publication et mention de la délivrance du brevet: **20.03.2024**
(21) Numéro de dépôt: 21725975.3
(22) Date de dépôt: 15.04.2021
(51) Int. Cl.: B60Q 3/225, B60Q 3/51, B60R 7/06

(54) **SOUS-ENSEMBLE DE PLANCHE DE BORD DE VÉHICULE AUTOMOBILE**
ARMATURENBRETT-UNTERBAUGRUPPE FÜR EIN KRAFTFAHRZEUG
MOTOR VEHICLE DASHBOARD SUB-ASSEMBLY

(30) Priorité: 25.05.2020 FR 2005518
(43) Date de publication de la demande: 05.04.2023
(73) Titulaire: Stellantis Auto SAS, 78300 Poissy (FR)
(72) Inventeur: MARTIN, Philippe, 25200 MONTBELIARD (FR); HERMEN, Frederic, 25200 MONTBELIARD (FR); SAUVAGE, Sebastien, 25200 GRAND CHARMONT (FR); COMBEAU, Frederic, 25750 DESANDANS (FR)
(86) Numéro de dépôt international: PCT/FR2021/050658
(87) Numéro de publication internationale: WO 2021/240080

(56) Documents cités:
- EP-A1- 1 950 092
- WO-A1-2013/088012
- DE-A1- 1 605 897
- JP-A- H09 240 369
- JP-A- 2004 276 879
- JP-U- H0 423 537
- US-A1- 2017 253 199
- US-A1- 2019 031 121

## Description

### [Domaine technique]

La présente invention concerne d'une manière générale la problématique du montage du module d'éclairage d'un dispositif de rangement de type boîte à gants ou vide poches et intégré dans le sous-ensemble de planche de bord d'un véhicule automobile.

L'invention vise en particulier un sous-ensemble de planche de bord dont le corps de planche de bord est pourvu de moyens d'assistance au montage d'un tel module d'éclairage.

### [Technique antérieure]

Un sous-ensemble de planche de bord pour véhicule automobile comporte classiquement une traverse de planche de bord, un corps de planche de bord monté rigidement sur la traverse, ainsi que de nombreux autres éléments dont en particulier un dispositif de rangement de type boîte à gants ou vide-poches monté rigidement sur le corps de planche de bord et la traverse.

Un tel dispositif de rangement comporte classiquement un caisson creux présentant une ouverture d'accès à son extrémité arrière et saillant en avant du corps de planche de bord au travers d'une découpe ménagée dans ce corps, ainsi qu'un portillon monté articulé à pivotement autour d'un axe transversal sur la partie inférieure de ce caisson entre une position fermée dans laquelle il obture ladite ouverture d'accès et une position ouverte permettant d'accéder à l'intérieur du caisson au travers de ladite ouverture.

Par ailleurs, le sous-ensemble de planche de bord intégrant le caisson et le portillon du dispositif de rangement est classiquement pré-assemblé dans un premier atelier puis transporté jusqu'à la ligne d'assemblage finale du véhicule pour y être fixée à la structure de caisse de ce véhicule.

Ces dispositifs de rangement sont également équipés de manière classique d'un module d'éclairage comprenant un boîtier clipsé sur un orifice de réception ménagé dans la paroi supérieure du caisson et alimenté par un câble électrique relié à une source d'alimentation continue telle que la batterie du véhicule.

Le boîtier du module d'éclairage comprend une source lumineuse insérée sur un circuit électrique dont la fermeture est commandée par l'ouverture du couvercle de ce dispositif de rangement, de sorte que la cavité ne soit éclairée que dans la position ouverte du couvercle.

Pour ce faire, le module d'éclairage comprend généralement une tige poussoir saillant de l'extrémité arrière du boîtier et traversant le pourtour de l'ouverture d'accès contre lequel le couvercle vient se rabattre dans sa position fermée, cette tige étant mobile à coulissement selon un axe de translation entre une position rétractée et une position sortie vers laquelle elle est sollicitée par un ressort.

Lorsque le couvercle occupe sa position fermée, celui-ci contraint la tige dans sa position rétractée à l'encontre du ressort. Dès lors que le couvercle s'ouvre, le ressort rappelle la tige dans sa position sortie où elle actionne un interrupteur commandant la fermeture du circuit.

Après la mise en place du sous-ensemble de planche bord sur le véhicule, le câblage électrique des différents équipements présents sur ce sous-ensemble et en particulier celui du module d'éclairage du dispositif de rangement est ensuite réalisé manuellement par un opérateur.

Ce dernier doit ainsi faire cheminer transversalement le câble d'alimentation électrique de ce dispositif de rangement le long de la face arrière (celle orientée vers l'habitacle) du corps de planche de bord et faire passer son extrémité libre pourvue d'un connecteur au travers de l'orifice de réception ménagé dans la paroi supérieure du caisson.

Ce caisson du dispositif de rangement faisant saillie en avant du corps de planche de bord, le câble d'alimentation doit traverser au préalable ce corps de planche de bord au niveau d'une lumière ménagée dans ce corps, ce qui signifie que l'introduction de l'extrémité de ce câble d'alimentation au travers de l'orifice de réception doit être réalisée en aveugle par l'opérateur et en manipulant une portion plus éloignée de ce câble.

Le document US2017/253199 décrit un véhicule comportant une planche de bord recouvrant une traverse de planche de bord, la planche de bord comportant un dispositif de rangement. Les documents JP H09 240369 et JP2004276879 décrivent des dispositifs de rangement disposés dans une planche de bord et comportant des dispositifs d'éclairage.

### [Exposé de l'invention]

La présente invention vise donc à améliorer la situation.

Elle propose à cet effet un sous-ensemble de planche de bord comportant une traverse de planche de bord, un corps de planche de bord monté rigidement sur ladite traverse, ainsi qu'un dispositif de rangement comprenant un caisson creux ouvert à son extrémité arrière et saillant en avant dudit corps de planche de bord au travers d'une découpe ménagée dans ce corps, ledit caisson comprenant une paroi supérieure présentant un orifice de réception pour le boîtier d'un module d'éclairage destiné à être alimenté par un câble d'alimentation électrique pourvu à l'une de ses extrémités d'un connecteur, ledit corps de planche de bord présentant une lumière de passage agencée au dessus de ladite découpe de sorte à permettre à ladite extrémité du câble pourvue du connecteur de traverser ce corps d'arrière en avant ;
caractérisé en ce que ledit corps de planche de bord comporte, sur sa face avant, une première rampe de guidage agencée pour guider ladite extrémité dudit câble d'alimentation munie du connecteur jusqu'audit orifice de réception ménagé dans la paroi supérieure dudit caisson.

La présence d'une telle rampe de guidage permet ainsi de faciliter, pour l'opérateur en charge du montage du module d'éclairage, la mise en place en aveugle de l'extrémité du câble d'alimentation de ce module d'éclairage au travers de l'orifice de réception ménagé dans la paroi supérieure du caisson.

Selon des caractéristiques préférées dudit sous-ensemble de planche de bord selon l'invention :
- ladite première rampe de guidage est implantée sous et à la verticale de ladite lumière de passage, et en ce qu'elle présente une pente descendante en direction dudit orifice de réception ;
- la pente descendante de ladite première rampe présente une inclinaison vis-à-vis de la verticale comprise entre 30 et 45° ;
- l'extrémité arrière dudit caisson creux est bordée par un bandeau périphérique fixé contre la face arrière du corps de planche de bord sur le pourtour de ladite découpe, la portion supérieure dudit bandeau étant pourvue d'un trou prévu pour être traversé par une tige poussoir saillant du boîtier dudit module d'éclairage ;
- ledit corps de planche de bord comporte, sur sa face avant, une seconde rampe de guidage agencée pour guider l'extrémité libre de ladite tige poussoir jusqu'audit trou lors du montage dudit boîtier du module d'éclairage sur ledit orifice de réception ménagé dans la paroi supérieure dudit caisson ;
- ladite seconde rampe de guidage est agencée à l'aplomb de l'extrémité arrière de la paroi supérieure dudit caisson au niveau dudit trou et en ce qu'elle présente une pente descendante vers l'arrière débouchant contre la face avant de la portion supérieure dudit bandeau périphérique du caisson, au sommet de ce trou ;
- la pente descendante de ladite seconde rampe présente une inclinaison vis-à-vis de l'horizontale comprise entre 30 et 45° ;
- ledit trou présente une forme oblongue orientée verticalement ; et/ou
- ledit corps de planche de bord est constitué d'au moins un insert venu de moulage par injection à partir d'un polymère thermoplastique.

L'invention vise également sous un second aspect un véhicule automobile comportant un tel sous-ensemble de planche de bord.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue partielle en perspective de trois quart arrière d'un sous-ensemble de planche de bord de véhicule automobile selon l'invention ;
[Fig 2] est une vue agrandie de la face avant de la portion supérieure du pourtour périphérique de la découpe du corps de planche de bord recevant le caisson du dispositif d'éclairage ;
[Fig 3] représente une vue partielle en perspective du sous-ensemble de planche de bord illustrant la première étape du montage du module d'éclairage sur le caisson du dispositif d'éclairage ;
[Fig 4] est une vue partielle en perspective du sous-ensemble de planche de bord illustrant la deuxième étape du montage du module d'éclairage sur le caisson du dispositif d'éclairage ;
[Fig 5] représente une vue partielle en perspective du sous-ensemble de planche de bord illustrant la troisième étape du montage du module d'éclairage sur le caisson du dispositif d'éclairage ;
[Fig 6] représente une vue partielle en section du sous-ensemble de planche de bord illustrant également la troisième étape du montage du module d'éclairage sur le caisson du dispositif d'éclairage ;
[Fig 7] représente une vue partielle en perspective du sous-ensemble de planche de bord illustrant la quatrième et dernière étape du montage du module d'éclairage sur le caisson du dispositif d'éclairage ; et
[Fig 8] représente une vue partielle en section du sous-ensemble de planche de bord illustrant également la quatrième étape du montage du module d'éclairage sur le caisson du dispositif d'éclairage.

### [Description détaillée]

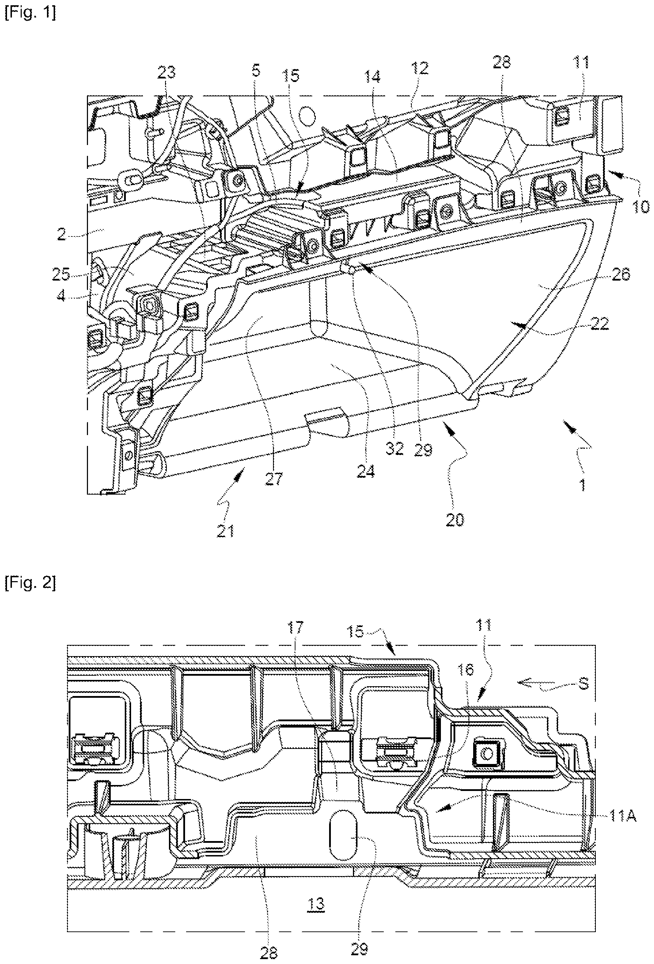

La Figure 1 représente une vue partielle d'un sous-ensemble de planche de bord 1 destiné à être monté sur la ligne d'assemblage d'un véhicule automobile.

Dans la description qui va suivre et par convention, les termes les termes « supérieur », « inférieur », « longitudinal » et « transversal » seront définis par rapport à la position de montage de ce sous-ensemble de planche de bord 1 dans le véhicule.

Les termes « avant » et « arrière » seront utilisés pour définir la position relative d'un élément par rapport à un autre selon la direction axiale du véhicule orientée dans le sens de déplacement normal de ce véhicule.

Tel qu'illustré sur cette figure 1, le sous-ensemble de planche de bord 1 comporte une traverse de planche de bord 2 comprenant un tube principal en acier 3 destinée à être fixée par ses deux extrémités sur les doublures des ailes latérales avant de la structure de caisse du véhicule de sorte à s'étendre transversalement sur toute la largeur de ce véhicule au dessus des pieds du conducteur et du passager avant.

Le sous-ensemble de planche de bord 1 comporte également un corps de planche de bord 10 en matière plastique monté rigidement sur la traverse de planche de bord 2 par l'intermédiaire de supports de fixation métalliques 4.

Ce corps de planche de bord 10 est en l'espèce constitué d'un premier insert principal 11 et d'un second insert 12 de plus petite dimension fixé rigidement par vissage à la partie supérieure de cet insert principal 11.

Ces deux inserts 11, 12 sont chacun venus de moulage par injection à partir d'un polymère thermoplastique renforcé éventuellement en fibres naturelles et/ou synthétiques, tel que par exemple le polyuréthane (PUR), l'acrylonitrile butadiène styrène (ABS), le polypropylène (PP) ou encore le Polychlorure de vinyle (PVC).

Toujours en référence à la figure 1, le sous-ensemble de planche de bord 1 comporte également un dispositif de rangement 20 de type boîte à gants ou vide-poches monté rigidement sur la traverse 2 et sur l'insert principal 11 du corps de planche de bord 10.

Le dispositif de rangement 20 comporte un caisson rigide creux 21 de forme sensiblement parallélépipédique, délimitant une cavité interne de rangement, et étant monté au travers d'une découpe rectangulaire 13 ménagée dans la partie droite de l'insert principal 11 du corps de planche de bord 10 (voir figure 2).

Le caisson 21 comprend une ouverture d'accès 22 débouchant sur la face arrière tournée vers l'habitacle de cet insert principal 11 du corps de planche de bord 10, deux parois supérieure 23 et inférieure 24 opposées l'une à l'autre, deux parois latérales 25, 26 opposées l'une à l'autre et reliant les parois supérieure 23 et inférieure 24, ainsi qu'une paroi de fond 27 opposée à l'ouverture d'accès 22.

Les extrémités arrière de la paroi supérieure 23 et des parois latérales 25, 26 sont bordées par un bandeau périphérique 28 fixé par vissage contre la face arrière de l'insert principal 11 sur le pourtour de la découpe 13 recevant le caisson 21.

Le dispositif de rangement 20 comporte également un portillon (non représenté sur les figures pour une meilleure visibilité) monté articulé à pivotement autour d'un axe transversal sur l'extrémité arrière de la paroi inférieure 24 de ce caisson 21, entre une position fermée dans laquelle il obture l'ouverture d'accès 22 en reposant contre le bandeau périphérique 28 et une position ouverte permettant d'accéder à ladite cavité au travers de cette même ouverture 22.

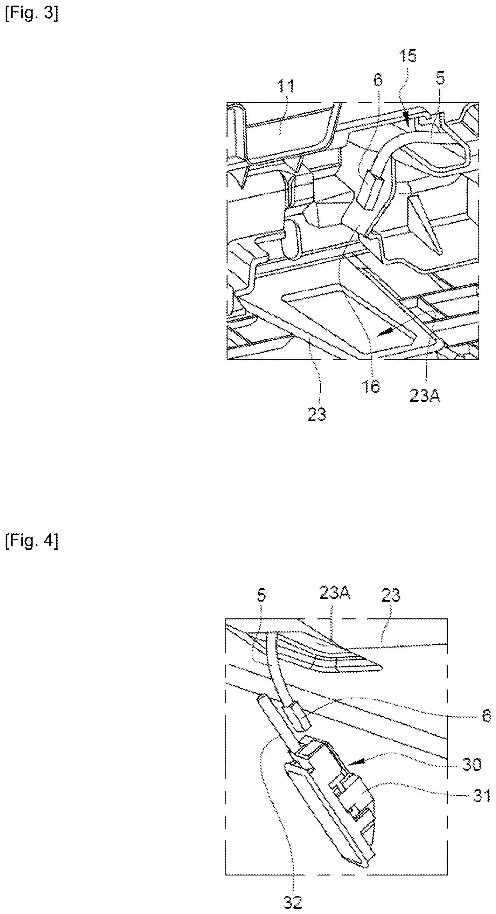

Après la mise en place du sous-ensemble de planche de bord 1 sur un véhicule, un opérateur doit réaliser son câblage électrique en faisant cheminer transversalement plusieurs câbles d'alimentation (reliés à une source d'alimentation continue telle que la batterie du véhicule) le long de la face arrière du corps de planche de bord 10, de sorte à alimenter les différents équipements électriques pré-montés sur ce sous-ensemble ainsi que d'autres montés ultérieurement sur la ligne d'assemblage finale de ce véhicule tels qu'en particulier le module d'éclairage 30 du dispositif de rangement 20 prévu pour être clipsé sur un orifice de réception rectangulaire 23A ménagé dans la paroi supérieure 23 du caisson 21 (voir figures 3 et 4).

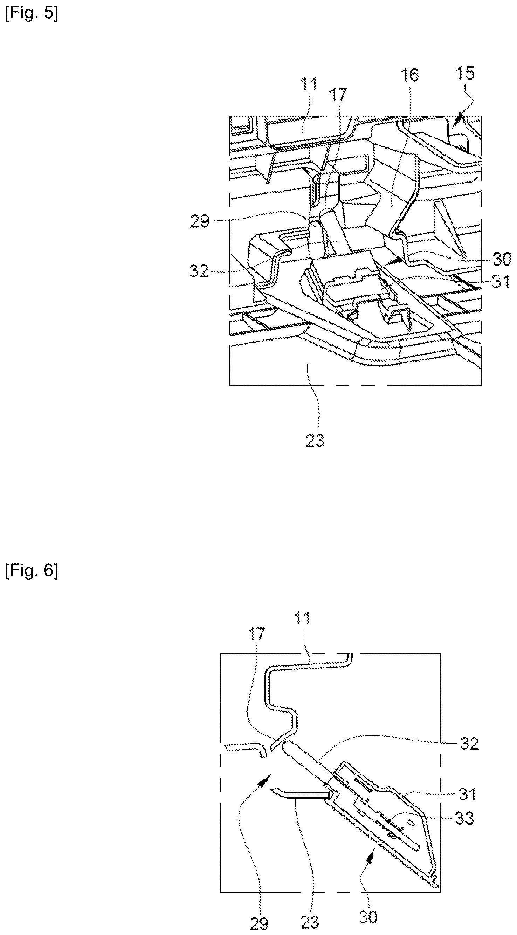

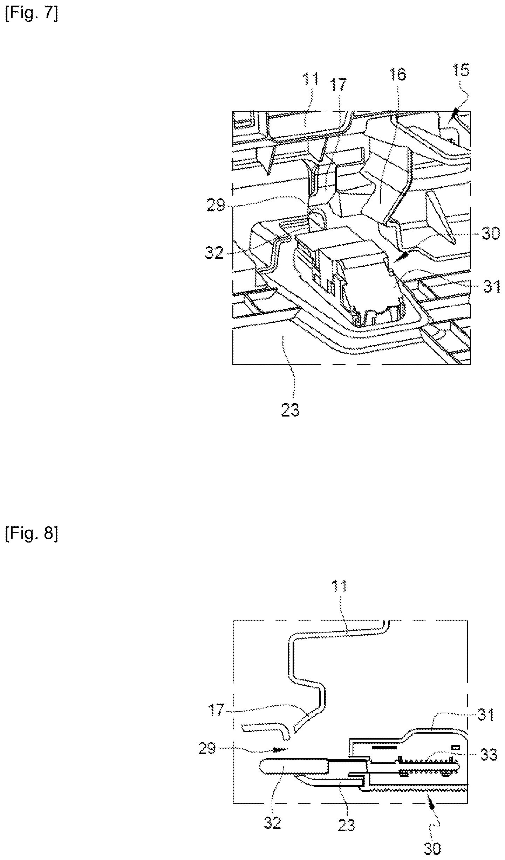

En référence à la figure 4, ce module d'éclairage 30 comprend un boîtier sensiblement parallélépipédique 31 logeant une source lumineuse (non visible) insérée sur un circuit électrique dont l'ouverture et la fermeture sont commandées par une tige poussoir 32 saillant de l'extrémité arrière de ce boîtier 31 et montée mobile à coulissement selon un axe de translation entre une position rétractée où ce circuit est fermé et une position sortie où ce circuit est ouvert et vers laquelle elle est sollicitée par un ressort 33 visible sur les figures 6 et 8.

Tel qu'illustré sur les figures 1, 7 et 8, cette tige poussoir 32 est destinée, dans la configuration montée de ce module d'éclairage 30, à traverser un trou oblong 29 orienté verticalement et ménagé dans la portion supérieure du bandeau périphérique 28, de sorte que le portillon du dispositif de rangement 20 la contraigne, à l'encontre du ressort 33, dans sa position rétractée lorsqu'il vient occuper sa position fermée.

Le montage de ce module d'éclairage 30 s'effectuant, notamment pour des raisons d'accessibilité, par l'intérieur de la cavité de rangement du caisson 21, l'opérateur doit pouvoir y insérer au préalable, via l'orifice de réception 23A, l'extrémité du câble d'alimentation 5 de ce module 30, pourvue d'un connecteur de raccordement 6.

Le caisson 21 du dispositif de rangement 20 faisant saillie à l'avant du corps de planche de bord 10, une lumière de passage 15 est pratiquée dans un élément en relief 14 de l'insert principal 11 de ce corps 10 au dessus de la découpe 13 recevant le caisson 21 (voir figures 1 à 3), de sorte à permettre à l'extrémité du câble d'alimentation 5 pourvue du connecteur 6 de traverser le corps de planche de bord 10.

Comme on peut le voir sur la figure 2 et considérant le sens de cheminement S du câble d'alimentation 6 (ici de la partie gauche du véhicule à sa partie droite), cette lumière 15 est disposée légèrement en amont de l'orifice de réception 23A pour le module d'éclairage 30.

Tel qu'illustré sur les figures 2 et 3, l'insert principal 11 du corps de planche de bord 10 comprend sur sa face avant (celle orientée à l'opposé de l'habitacle) une première rampe de guidage 16 agencée pour guider l'extrémité du câble d'alimentation 5 munie du connecteur 6 jusqu'à l'orifice de réception 23A ménagé dans la paroi supérieure 23 du caisson 21.

Implantée sous et à la verticale de la lumière de passage 15, cette première rampe de guidage 16 présente une pente descendante en direction de cet orifice de réception 23A dont l'inclinaison vis-à-vis de la verticale est comprise de préférence entre 30 et 45°.

Tel qu'illustré par la figure 3 et du fait de la grande souplesse du câble d'alimentation 5, lorsque l'opérateur fait passer son extrémité pourvue du connecteur 6 au travers de la lumière 15, cette dernière, entrainée par la masse du connecteur 6, se courbe quasiment à la verticale et ce connecteur 6 vient au contact de la rampe 16.

Il suffit alors à l'opérateur de faire avancer progressivement ce câble d'alimentation 5 au travers de la lumière 15 pour entrainer le glissement de son extrémité portant le connecteur 6 le long de la rampe 16, puis son insertion au travers de l'orifice de réception 23A de la paroi supérieure 23 du caisson 21 comme montré sur la figure 4.

Tel qu'illustré sur cette figure 4, l'opérateur peut dès lors brancher le connecteur 6 à l'extrémité arrière du boîtier 31 du module d'éclairage 30 en introduisant ses deux mains à l'intérieur du caisson 21.

Le connecteur 6 et la tige poussoir 32 saillant à l'arrière du boîtier 31 de ce module d'éclairage 30, cet opérateur est contraint, tel qu'illustré par la figure 4 et afin de pouvoir introduire ce boîtier 31 dans l'orifice de réception 23A, de positionner ce module d'éclairage 30 en biais (selon une inclinaison d'environ 45° avec l'horizontale) dans l'alignement de cet orifice 23A avec l'extrémité libre de la tige poussoir 32 orientée vers cet orifice 23A.

Afin de guider le cheminement jusqu'au trou oblong 29 de l'extrémité libre de cette tige poussoir 32 après qu'elle a traversé cet orifice 23A, l'insert principal 11 du corps de planche de bord 10 comprend sur sa face avant une seconde rampe de guidage 17 agencée à l'aplomb de l'extrémité arrière de la paroi supérieure 23 du caisson 21 au niveau du trou 29 et présentant une pente descendante vers l'arrière débouchant contre la face avant de la portion supérieure du bandeau périphérique 28 du caisson 21, au sommet de ce trou 29.

L'inclinaison vis-à-vis de l'horizontale de pente descendante de la seconde rampe de guidage 17 est comprise de préférence entre 30 et 45°.

Lors de l'introduction du module d'éclairage 30 au travers de l'orifice 23A suivant un mouvement de coulissement en biais d'arrière en avant, l'extrémité libre 32A de la tige poussoir 32 vient au contact de cette seconde rampe 17.

Tel qu'illustré par les figures 5 et 6, la poursuite de ce mouvement d'introduction du module d'éclairage 30 entraine une compression de cette tige poussoir 32 contre cette seconde rampe 17, cette compression se poursuivant jusqu'à ce que la portion inférieure du bord avant du boîtier 31 arrive en butée contre le bord avant de l'orifice de réception 23A.

L'opérateur doit ensuite faire pivoter vers le haut la partie avant de ce module d'éclairage 30 autour de ce bord avant de l'orifice de réception 23A pour entrainer le glissement de l'extrémité libre 32A de la tige poussoir 32 le long de la seconde rampe 17 et jusqu'à l'extrémité supérieure du trou oblong 29.

Dès lors que cette extrémité libre 32A vient en regard de l'extrémité supérieure de ce trou 29, la tige poussoir 32 se détend en le traversant et en reprenant sa position de sortie.

On notera que la forme oblongue du trou 29 facilite l'insertion de la tige poussoir 31.

L'opérateur n'a alors plus qu'à poursuivre le pivotement vers le haut de la partie avant de ce module d'éclairage 30 autour de ce bord avant de l'orifice de réception 23A pour entrainer le clipsage de son boîtier 31 dans cet orifice 23A.

Le module d'éclairage 30 occupe dès lors sa configuration montée illustrée par les figures 7 et 8.

Selon des variantes de réalisation non représentées, les rampes de guidage peuvent être agencées différemment.

Le corps de planche de bord peut également être constitué d'une seule pièce en monobloc.

## Revendications

1. Sous-ensemble de planche de bord de véhicule automobile comportant une traverse de planche de bord (2), un corps de planche de bord (10) monté rigidement sur ladite traverse (2), ainsi qu'un dispositif de rangement (20) comprenant un caisson creux (21) ouvert à son extrémité arrière et saillant en avant dudit corps de planche de bord (10) au travers d'une découpe (13) ménagée dans ce corps (10), ledit caisson (21) comprenant une paroi supérieure (23) présentant un orifice de réception (23A) pour le boîtier (31) d'un module d'éclairage (30) destiné à être alimenté par un câble d'alimentation électrique (5) pourvu à l'une de ses extrémités d'un connecteur (6), ledit corps de planche de bord (10) présentant une lumière de passage (15) agencée au dessus de ladite découpe (13) de sorte à permettre à ladite extrémité du câble (5) pourvue du connecteur (6) de traverser ce corps (10) d'arrière en avant ;
**caractérisé en ce que** ledit corps de planche de bord (10) comporte, sur sa face avant, une première rampe de guidage (16) agencée pour guider ladite extrémité dudit câble d'alimentation (5) munie du connecteur (6) jusqu'audit orifice de réception (23A) ménagé dans la paroi supérieure (23) dudit caisson (21).

2. Sous-ensemble de planche de bord selon la
revendication 1, **caractérisé en ce que** ladite première rampe de guidage (16) est implantée sous et à la verticale de ladite lumière de passage (15), et **en ce qu'**elle présente une pente descendante en direction dudit orifice de réception (23A).

3. Sous-ensemble de planche de bord selon la
revendication 2, **caractérisé en ce que** la pente descendante de ladite première rampe (16) présente une inclinaison vis-à-vis de la verticale comprise entre 30 et 45°.

4. Sous-ensemble de planche de bord selon l'une des
revendications 1 à 3, **caractérisé en ce que** l'extrémité arrière dudit caisson creux (21) est bordée par un bandeau périphérique (28) fixé contre la face arrière du corps de planche de bord (10) sur le pourtour de ladite découpe (13), la portion supérieure dudit bandeau (28) étant pourvue d'un trou (29) prévu pour être traversé par une tige poussoir (32) saillant du boîtier (31) dudit module d'éclairage (30).

5. Sous-ensemble de planche de bord selon la
revendication 4, **caractérisé en ce que** ledit corps de planche de bord (10) comporte, sur sa face avant, une seconde rampe de guidage (17) agencée pour guider l'extrémité libre de ladite tige poussoir (32) jusqu'audit trou (29) lors du montage dudit boîtier (31) du module d'éclairage (30) sur ledit orifice de réception (23A) ménagé dans la paroi supérieure (23) dudit caisson (21).

6. Sous-ensemble de planche de bord selon la
revendication 5, **caractérisé en ce que** ladite seconde rampe de guidage (17) est agencée à l'aplomb de l'extrémité arrière de la paroi supérieure (23) dudit caisson (21) au niveau dudit trou (29) et **en ce qu'**elle présente une pente descendante vers l'arrière débouchant contre la face avant de la portion supérieure dudit bandeau périphérique (28) du caisson (21), au sommet de ce trou (29).

7. Sous-ensemble de planche de bord selon la
revendication 6, **caractérisé en ce que** la pente descendante de ladite seconde rampe (17) présente une inclinaison vis-à-vis de l'horizontale comprise entre 30 et 45°.

8. Sous-ensemble de planche de bord selon l'une des
revendications 4 à 7, **caractérisé en ce que** ledit trou (29) présente une forme oblongue orientée verticalement.

9. Sous-ensemble de planche de bord selon l'une des
revendications 1 à 8, **caractérisé en ce que** ledit corps de planche de bord (10) est constitué d'au moins un insert (11, 12) venu de moulage par injection à partir d'un polymère thermoplastique.

10. Véhicule automobile **caractérisé en ce qu'**il comporte un sous-ensemble de planche de bord selon l'une des revendications 1 à 9.

## Patentansprüche

1. Kraftfahrzeug-Armaturenbrett-Unterbaugruppe mit einem Armaturenbrett-Querträger (2), einem Armaturenbrettkörper (10), der starr an dem Querträger (2) angebracht ist, und einer Aufbewahrungsvorrichtung (20), die einen Hohlkasten (21) umfasst, der an seinem hinteren Ende offen ist und vor dem Armaturenbrettkörper (10) durch einen Ausschnitt (13) in diesem Körper (10) vorsteht, wobei der Kasten (21) eine obere Wand (23) mit einer Aufnahmeöffnung (23A) für das Gehäuse (31d) umfasst ein Beleuchtungsmodul (30) zur Stromversorgung durch ein Stromversorgungskabel (5), das an einem seiner Enden mit einem Verbinder (6) versehen ist, wobei der Armaturenbrettkörper (10) ein Durchgangsloch (15) aufweist, das über dem Ausschnitt (13) angeordnet ist, sodass das Ende des Kabels (5), das mit dem Verbinder (6) versehen ist, diesen Körper (10) von hinten nach vorne durchqueren kann;
**dadurch gekennzeichnet, dass** der Armaturenbrettkörper (10) auf seiner Vorderseite eine erste Führungsrampe (16) aufweist, die so angeordnet ist, dass sie das mit dem Verbinder (6) versehene Ende des Zuführkabels (5) zu der Aufnahmeöffnung (23A) führt, die in der oberen Wand (23) des Gehäuses (21) ausgebildet ist.

2. Armaturenbrett-Unterbaugruppe nach Anspruch 1, **dadurch gekennzeichnet, dass** die erste Führungsrampe (16) unter und vertikal der Durchgangsöffnung (15) angeordnet ist und eine zur Aufnahmeöffnung (23A) hin abfallende Neigung aufweist.

3. Armaturenbrett-Unterbaugruppe nach Anspruch 2, **dadurch gekennzeichnet, dass** die abfallende Neigung der ersten Rampe (16) eine Neigung zur Vertikalen zwischen 30 und 45° aufweist.

4. Armaturenbrett-Unterbaugruppe nach einem der Ansprüche 1 bis 3, **dadurch gekennzeichnet, dass** das hintere Ende des Hohlkastens (21) von einem Umfangsband (28) umgeben ist, das an der Rückseite des Armaturenbrettkörpers (10) auf dem Umfang des Ausschnitts (13) befestigt ist, wobei der obere Abschnitt des Bandes (28) mit einem Loch (29) versehen ist, das vorgesehen ist, um von einer aus dem Gehäuse (31) des Beleuchtungsmoduls (30) hervorstehenden Schubstange (32) durchquert zu werden.

5. Armaturenbrett-Unterbaugruppe nach Anspruch 4, **dadurch gekennzeichnet, dass** der Armaturenbrettkörper (10) an seiner Vorderseite eine zweite Führungsrampe (17) aufweist, die so angeordnet ist, dass sie das freie Ende der Schubstange (32) zu dem Loch (29) führt, wenn das Gehäuse (31) des Beleuchtungsmoduls (30) an der Aufnahmeöffnung (23A) in der oberen Wand (23) des Gehäuses (21) montiert wird.

6. Armaturenbrett-Unterbaugruppe nach Anspruch 5, **dadurch gekennzeichnet, dass** die zweite Führungsrampe (17) senkrecht zum hinteren Ende der oberen Wand (23) des Kastens (21) an dem Loch (29) angeordnet ist und eine nach hinten abfallende Neigung aufweist, die an der Vorderseite des oberen Abschnitts des Umfangsbandes (28) des Kastens (21) an der Oberseite dieses Lochs (29) mündet.

7. Armaturenbrett-Unterbaugruppe nach Anspruch 6, **dadurch gekennzeichnet, dass** die abfallende Neigung der zweiten Rampe (17) eine Neigung zur Horizontalen zwischen 30° und 45° aufweist.

8. Armaturenbrett-Baugruppe nach einem der Ansprüche 4 bis 7, **dadurch gekennzeichnet, dass** das Loch (29) eine vertikal ausgerichtete längliche Form aufweist.

9. Armaturenbrett-Baugruppe nach einem der Ansprüche 1 bis 8, **dadurch gekennzeichnet, dass** der Armaturenbrettkörper (10) aus mindestens einem Einsatz (11, 12) besteht, der aus einem thermoplastischen Polymer spritzgegossen ist.

10. Kraftfahrzeug, **dadurch gekennzeichnet, dass** es eine Armaturenbrett-Unterbaugruppe nach einem der Ansprüche 1 bis 9 umfasst.

## Claims

1. A motor vehicle dashboard sub-assembly comprising a dashboard crossmember (2), a dashboard body (10) mounted rigidly on said crossmember (2), and a storage device (20) comprising a hollow box (21) open at its rear end and projecting in front of said dashboard body (10) through a cut-out (13) provided in this body (10), said box (21) comprising an upper wall (23) having a receiving orifice (23A) for the housing (31) of a module lighting device (30) intended to be supplied by an electrical supply cable (5) provided at one of its ends with a connector (6), said dashboard body (10) having a passage opening (15) arranged above said cutout (13) so as to allow said end of the cable (5) provided with the connector (6) to pass through this body (10) from rear to front;
**characterized in that** said dashboard body (10) comprises, on its front face, a first guide ramp (16) arranged to guide said end of said power supply cable (5) provided with the connector (6) as far as said receiving orifice (23A) formed in the upper wall (23) of said box (21).

2. A dashboard sub-assembly according to claim 1, **characterized in that** said first guide ramp (16) is installed beneath and vertically above said passage opening (15), and **in that** it has a downward slope in the direction of said receiving orifice (23A).

3. Dashboard sub-assembly according to claim 2, **characterized in that** the downward slope of said first ramp (16) has an inclination with respect to the vertical of between 30 and 45°.

4. Dashboard sub-assembly according to one of claims 1 to 3, **characterized in that** the rear end of the said hollow box (21) is bordered by a peripheral strip (28) fixed against the rear face of the dashboard body (10) on the periphery of the said cut-out (13), the upper portion of the said strip (28) being provided with a hole (29) provided to be traversed by a push rod (32) projecting from the housing (31) of the said lighting module (30).

5. A dashboard sub-assembly according to claim 4, **characterized in that** said dashboard body (10) comprises, on its front face, a second guide ramp (17) arranged to guide the free end of said pusher rod (32) to said hole (29) during mounting of said housing (31) of the lighting module (30) on said receiving orifice (23A) formed in the upper wall (23) of said box (21).

6. Dashboard sub-assembly according to claim 5, **characterized in that** the said second guide ramp (17) is arranged vertically above the rear end of the upper wall (23) of the said box (21) at the level of the said hole (29) and **in that** it has a downward slope towards the rear emerging against the front face of the upper portion of the said peripheral strip (28) of the box (21), at the top of this hole (29).

7. Dashboard sub-assembly according to claim 6, **characterized in that** the downward slope of said second ramp (17) has an inclination with respect to the horizontal of between 30 and 45°.

8. Dashboard sub-assembly according to one of claims 4 to 7, **characterized in that** the said hole (29) has a vertically oriented oblong shape.

9. Dashboard sub-assembly according to one of claims 1 to 8, **characterized in that** the said dashboard body (10) consists of at least one insert (11, 12) which is injection-molded from a thermoplastic polymer.

10. Motor vehicle, **characterized in that** it comprises a dashboard subassembly according to one of claims 1 to 9.1
